Europäisches Patentamt

European Patent Office

Office européen des brevets

(19)

(11) Veröffentlichungsnummer : **0 088 931**
**B1**

(12)  EUROPÄISCHE PATENTSCHRIFT

(45) Veröffentlichungstag der Patentschrift :
10.09.86

(51) Int. Cl.⁴ : **B 60 R 13/02**

(21) Anmeldenummer : 83101945.0

(22) Anmeldetag : 28.02.83

(54) Innenverkleidung (Himmel) von Fahrzeugdächern.

(30) Priorität : 11.03.82 DE 3208804

(43) Veröffentlichungstag der Anmeldung :
21.09.83 Patentblatt 83/38

(45) Bekanntmachung des Hinweises auf die Patenterteilung : 10.09.86 Patentblatt 86/37

(84) Benannte Vertragsstaaten :
DE FR GB IT SE

(56) Entgegenhaltungen :
DE-A- 1 954 567
DE-A- 2 629 474
DE-A- 2 742 789
US-A- 4 214 788

(73) Patentinhaber : Adam Opel Aktiengesellschaft
Bahnhofsplatz 1 Postfach 1560
D-6090 Rüsselsheim (DE)

(72) Erfinder : Müller, Helmut E., Ing. (grad.)
Wiesenstrasse 62
D-6090 Rüsselsheim (DE)

(74) Vertreter : Baumgarten, Jochem, Dipl.-Ing. et al
C/O Adam Opel Aktiengesellschaft Bahnhofsplatz 1
Postfach 1560
D-6090 Rüsselsheim (DE)

EP 0 088 931 . B1

**Beschreibung**

Die Erfindung bezieht sich auf eine als vorgefertigtes selbsttragendes Bauteil ausgebildete Innenverkleidung (Himmel) von Fahrzeugdächern, die aus einem in einer Form warmverpreßten Grundmaterial, in das Versteifungsteile eingeformt sind, besteht und die durch Befestigungsmittel am Dachrahmen festlegbar ist. Ein derartiger Himmel ist durch DE-A-2 629 474 bekannt. Es ist bekannt, Innenverkleidungen der vorbezeichneten Art, sogenannte Fertighimmel, aus verschiedenartigen Grundmaterialien zu fertigen und in die Fahrzeuge, z. B. Personenkraftwagen, einzukleben oder über Abdeckleisten und/oder Kleiderhaken, Haltegriffe und Sonnenblenden am Dachrahmen zu befestigen. Als diesbezüglicher druckschriftlicher Stand der Technik werden beispielsweise genannt die DE-A-19 54 567 und DE-A-27 42 789.

Bedingt durch Toleranzen und Einbaumethode beim Schrauben oder Dübeln entsteht bei den bekannten Innenverkleidungen ein Abstand zur Dachhaut (vgl. hier insbesondere Fig. 1 der DE-A-19 54 567). Durch diesen Abstand wird zum einen die Kopfraumhöhe verringert. Zum anderen muß der Zwischenraum durch kostspieliges Dämpfungsmaterial ausgefüllt werden, um lästiges Klappern und Körperschall-Geräusche zu vermeiden.

Eine andere bekannte Methode zur Verhinderung von Klappern der Innenverkleidung besteht darin, den bzw. die Dachspriegel auf die Dachaußenhaut abzustimmen und mit dieser zu verschweißen oder zu verkleben. Der wesentliche Nachteil liegt hierbei in dem erheblichen Arbeitsaufwand, der naturgemäß auch einen entsprechenden Kostenaufwand bedeutet.

Aufgabe der vorliegenden Erfindung ist es, eine Innenverkleidung der eingangs bezeichneten Gattung zu schaffen, bei der ein Zwischenraum zu der Dachhaut sowie lästige Klappergeräusche mit einfachen Mitteln und ohne großen Arbeits- oder Kostenaufwand vermieden werden.

Gemäß der Erfindung wird die Aufgabe dadurch gelöst, daß die in Fahrzeugquerrichtung gerichteten Versteifungsteile als sich über die gesamte oder im wesentlichen gesamte Breite der Innenverkleidung erstreckende Blech- oder Kunststoffstreifen ausgebildet sind und an ihren Enden durch das Grundmaterial der Innenverkleidung hindurch zugängliche Befestigungslöcher aufweisen, und daß in den Befestigungslöchern nockenförmige Befestigungsteile drehbar angeordnet sind, die jeweils mit einer excentrischen Ringnut in korrespondierende Löcher des Dachrahmens einklipsbar und bei Drehung kraftschlüssig verriegelbar sind.

Bei einer Innenverkleidung, welche aus in einem Arbeitsgang verprägten, kaschierten und gestanzten Fiberglasmatten besteht, sind die Blech- oder Kunststoffstreifen zweckmäßigerweise zwischen zwei Fiberglasmatten oder zwischen einer Fiberglasmatte und der Kaschierung angeordnet.

Die erfindungsgemäße Innenverkleidung zeichnet sich gegenüber den oben beschriebenen bekannten Innenverkleidungen der in Rede stehenden Art durch einen hohen Qualitätsstandard (geringere Toleranzen), eine einfache Montage, geringeres Gewicht (Wegfall toleranzausgleichender Materialien) sowie geringere Kosten (kürzere Montagezeit, keine Nacharbeit, weniger Material) aus.

In vorteilhafter Weiterbildung des Grundgedankens der Erfindung wird vorgeschlagen, daß die nockenförmigen Befestigungsteile mittels einer am Umfang angeordneten konzentrischen Ringnut in die jeweils zugeordneten Befestigungslöcher der Blech- oder Kunststoffstreifen eingeknöpft sind. Diese Maßnahme dient einer Herabsetzung der Montagezeit und spart damit Kosten.

In weiterer vorteilhafter Ausgestaltung der Erfindung weisen die nockenförmigen Befestigungsteile am Umfang eine zweite, exzentrisch ausgebildete Ringnut auf, in die beim Einklipsen das Blechmaterial des Dachrahmens eingreift, derart, daß durch Drehen des nockenförmigen Befestigungsteils eine Verspannung der Innenverkleidung gegenüber dem Dachrahmen erfolgt. Die bei bekannten Innenverkleidungen beobachteten lästigen Klappergeräusche werden hierdurch mit Sicherheit vermieden.

Um das Einklipsen in den Dachrahmen zu erleichtern, ist der an seinem Umfang die exzentrische Ringnut aufweisende Teil des nockenförmigen Befestigungsteils zweckmäßigerweise nach Art eines Spreizdübels ausgebildet, wobei er mehrere radiale Einschnitte besitzt, deren Schnittflächen axial gerichtet sind.

Hinsichtlich weiterer Ausgestaltungen und Vorteile der Erfindung wird auf die Unteransprüche sowie auf die Zeichnung und die nachstehende Beschreibung verwiesen. In der Zeichnung sind Ausführungsbeispiele der Erfindung dargestellt. Es zeigt:

Figur 1   eine perspektivische Gesamtansicht (stark verkleinert) einer als vorgefertigtes, selbsttragendes Bauteil ausgebildeten Innenverkleidung (sogenannter Fertighimmel) für das Dach eines Personenkraftwagens,

Figur 2   etwa auf natürliche Größe vergrößert — einen Schnitt längs der Linie II-II in Fig. 1,

Figur 3   eine Draufsicht auf das Ende eines in die Innenverkleidung nach Fig. 1 und 2 eingearbeiteten Blechstreifens,

Figur 4   eine perspektivische Darstellung eines Befestigungsteils zur Anbringung der Innenverkleidung am Dachrahmen,

Figur 5   eine (teilweise) perspektivische Darstellung eines Haltegriffes,

Figur 6   einen Schnitt längs der Linie VI-VI in Fig. 5,

Figur 7   eine etwas abgewandelte Ausführungsform der Erfindung, anhand einer perspektivischen Schnittdarstellung ähnlich Fig. 2,

Figur 8 eine andere Ausführungsform eines Befestigungsteils, in perspektivischer Darstellung entsprechend Fig. 4 und

Figur 9 eine (teilweise) perspektivische Darstellung eines Haltegriffes.

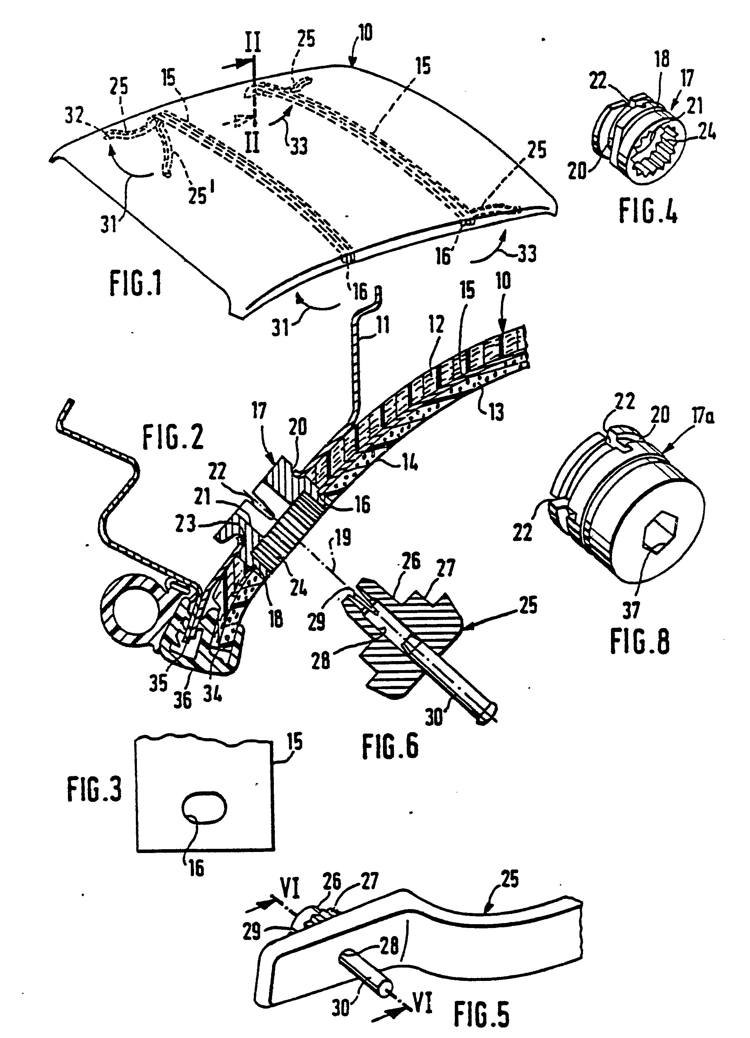

Nach Fig. 1 und 2 bezeichnet 10 eine als vorgefertigtes selbsttragendes Bauteil ausgebildete Innenverkleidung, einen sogenannten Fertighimmel für Fahrzeugdächer, insbesondere von Personenkraftfahrzeugen. Wie Fig. 2 erkennen läßt, besteht die am Dachrahmen 11 des Fahrzeugs zu befestigende Innenverkleidung 10 aus mehreren Schichten unterschiedlicher Werkstoffe. So besteht eine dem Dachrahmen 11 zugewandte äußere Schicht 12 aus Fiberglas. Eine sich daran innen anschließende weitere Schicht 13 ist aus einem Kunststoffschaum gefertigt. Die dem Fahrgastraum zugewandte Innenfläche der Schicht 13 ist schließlich mit einem Textilmaterial 14 kaschiert. Die Herstellung der beschriebenen Innenverkleidung 10 erfolgt in üblicher Weise in einem Arbeitsgang durch Warmverpressen in einer entsprechenden Form.

Wie weiterhin aus Fig. 1 und 2 hervorgeht, sind in die Innenverkleidung 10 zwei sich über die gesamte Breite derselben erstreckende Blechstreifen 15 eingearbeitet, wobei diese sich — wie Fig. 2 zeigt — zwischen den beiden Schichten 12 und 13 befinden. Die Funktion der Blechstreifen 15, auch Dachspriegel genannt, haben die Funktion, die in Fig. 2 veranschaulichte Befestigung der Innenverkleidung 10 am Dachrahmen 11 zu armöglichen. Sie besitzen zu diesem Zweck an ihren Enden jeweils ein Loch 16, welches — wie Fig. 3 erkennen läßt — eine gestreckte Langlochform aufweist, um einen Toleranzausgleich in Längsrichtung der Innenverkleidung 10 bzw. des Fahrzeugs zu ermöglichen. Anstelle der Blechstreifen können auch solche aus Kunststoff, z. B. einem glasfaservernetzten Polyester, verwendet werden, die im nicht ausgehärteten Zustand in die Form eingelegt und mit der Innenverkleidung verpreßt werden.

Zur Befestigung der Innenverkleidung 10 am Dachrahmen 11 dienen ferner nockenförmige Befestigungsteile, die insgesamt mit 17 beziffert sind. Wie Fig. 2 zeigt, ist in jedem Befestigungsloch 16 der Blechstreifen 15 jeweils ein nockenförmiges Befestigungsteil 17 drehbar angeordnet. Das nockenförmige Befestigungsteil 17 besitzt zu diesem Zweck an seinem Außenumfang eine Ringnut 18, in die das Material des Blechstreifens 15 einrastet. Die nockenförmigen Befestigungsteile 17 sind also mittels der zur Längsachse 19 des Befestigungsteils 17 konzentrischen Ringnut 18 in die Befestigungslöcher 16 der Blechstreifen 15 gewissermaßen eingeknöpft. Fig. 2 und 4 machen deutlich, daß das nockenförmige Befestigungsteil 17 an seinem Umfang eine zweite, mit 20 bezeichnete Ringnut aufweist, die jedoch gegenüber der Achse 19 des Befestigungsteil 17 exzentrisch angeordnet ist. das nockenförmige Befestigungsteil 17 weist eine abgesetzte konzentrische Durchgangsbohrung 21 auf und besitzt im Bereich der exzentrischen Ringnut 20 zwei axiale Einschnitte 22, derart, daß das Befestigungsteil 17 im Bereich der exzentrischen Ringnut 20 spreizdübelartig ausgebildet ist. Die beschriebene Ausgestaltung des nockenförmigen Befestigungsteils 17 ermöglicht ein Einklipsen desselben in korrespondierende Löcher 23 des Dachrahmens 11. Da die betreffenden nockenförmigen Befestigungsteile 17 — wie oben beschrieben — bei 16, 18 mit der Innenverkleidung 10 verbunden sind, erfolgt auf die im Vorstehenden erläuterte Weise die Befestigung der Innenverkleidung 10 am Dachrahmen 11 durch Einklipsen der Befestigungsnocken 17 in die entsprechenden Löcher 23 des Dachrahmens 11. Die betreffende Montageposition der Innenverkleidung 10 bzw. des Befestigungsteils 17 ist in Fig. 2 veranschaulicht. Durch Drehen des Befestigungsteils 17 kann nun aufgrund der Exzentrizität der Ringnut 20 ein Verspannen der Innenverkleidung 10 gegenüber dem Dachrahmen 11 erfolgen. Das Befestigungsteil 17 besitzt zu diesem Zweck am Innenumfang des erweiterten Teils seiner Durchgangsbohrung 21 eine Verzahnung 24. In die Innenverzahnung 24 des Befestigungsteils 17 kann vom Innenraum des Fahrzeugs her ein geeignetes, eine entsprechende Außenverzahnung aufweisendes Werkzeug eingreifen.

In dem gezeigten Ausführungsbeispiel — vgl. hierzu insbesondere Fig. 4, 5 und 6 — dient als « Verdrehwerkzeug » für das nockenförmige Befestigungsteil 17 der jeweilige am Dachrahmen zugeordnete Haltegriff für die Insassen des Fahrzeuges, der in Fig. 1 und 5 mit 25 beziffert ist. An der dem Fahrzeugrahmen 11 zugewandten Innenseite des Haltegriffes 25 ist, wie Fig. 5 und 6 zeigen, ein nach Art eines Arretierungsdübels ausgebildetes Betätigungselement 26 einstückig angeformt, welches an seinem Umfang eine der Innenverzahnung 24 des Befestigungsteils 17 entsprechende Außenverzahnung 27 besitzt. Der Haltegriff 25 weist außerdem eine das Betätigungselement 26, 27 konzentrisch durchsetzende Bohrung 28 auf. An seinem Ende ist das Betätigungselement 26 nach Art eines Spreizdübels ausgebildet, wobei es axiale Einschnitte 29 besitzt (vgl. Fig. 6). Die Durchgangsbohrung 28 dient, wie Fig. 5 und 6 andeuten, zur Aufnahme eines Bolzens 30.

Das Verspannen der Innenverkleidung 10 gegenüber dem Dachrahmen 11 mittels der im Vorstehenden beschriebenen Teile wird im einzelnen wie folgt vorgenommen. Zunächst wird die Innenverkleidung 10 mittels der eingeknöpften Sefestigungsteile 17 in die zugeordneten Löcher 23 des Dachrahmens 11 eingeklipst (vgl. Montagestellung gemäß Fig. 2). Anschließend wird der als Betätigungsmittel dienende Haltegriff 25 mittels der Außenverzahnung 27 in die Innenverzahnung 24 des Befestigungsteils 17 eingeführt, und zwar in einer Stellung, die in Fig. 1 mit 25' bezeichnet ist. Der Haltegriff 25 wird sodann in Pfeilrichtung 31 um 90° in seine endoültige Montagestellung verschwenkt. Gleichzeitig

erfolgt hierbei eine Drehung des Befestigungsteils 17, verbunden mit der bereits oben beschriebenen Verspannung der Innenverkleidung 10 aufgrund der Exzentrizität der Ringnut 20 des Befestigungsteils 17. Um die beteiligten Teile in der verspannten Endstellung der Innenverkleidung 10 zu fixieren, wird nun der Bolzen 30 in die Ausnehmung 28 des Haltegriffs 25 eingetrieben. Der Bolzen 30 bewirkt dabei ein Spreizen des Betätigungselements 26, derart, daß ein Lösen des Betätigungsgriffes 25 von dem Befestigungsteil 17 nun nicht mehr möglich ist. Schließlich kann der Haltegriff 25 an seinem zweiten, freien Ende 32 mit dem Dachrahmen verschraubt oder in anderer Weise verbunden werden.

Vorzugsweise werden die auf ein und derselben Seite der Innenverkleidung liegenden Befestigungsteile 17 jeweils gleichzeitig verdreht (Schwenken der betreffenden Haltegriffe 25 in Pfeilrichtung 31 bzw. 33). Hierdurch ergibt sich eine absolute Mittigkeit der Innenverkleidung 10 mit Bezug auf das Fahrzeugdach. Man erhält damit die Möglichkeit, den unteren Rand 34 bzw. 35 der Innenverkleidung 10 bzw. des Dachrahmens 11 mittels eines gemeinsamen sogenannten Doppelkanalkeders 36 abzudecken. Dieses Prinzip des Doppelkanalkeders ist wesentlich preisgünstiger zu verwirklichen als andere mögliche Abdeckungen der Innenverkleidung 10 bzw. des Dachrahmens 11.

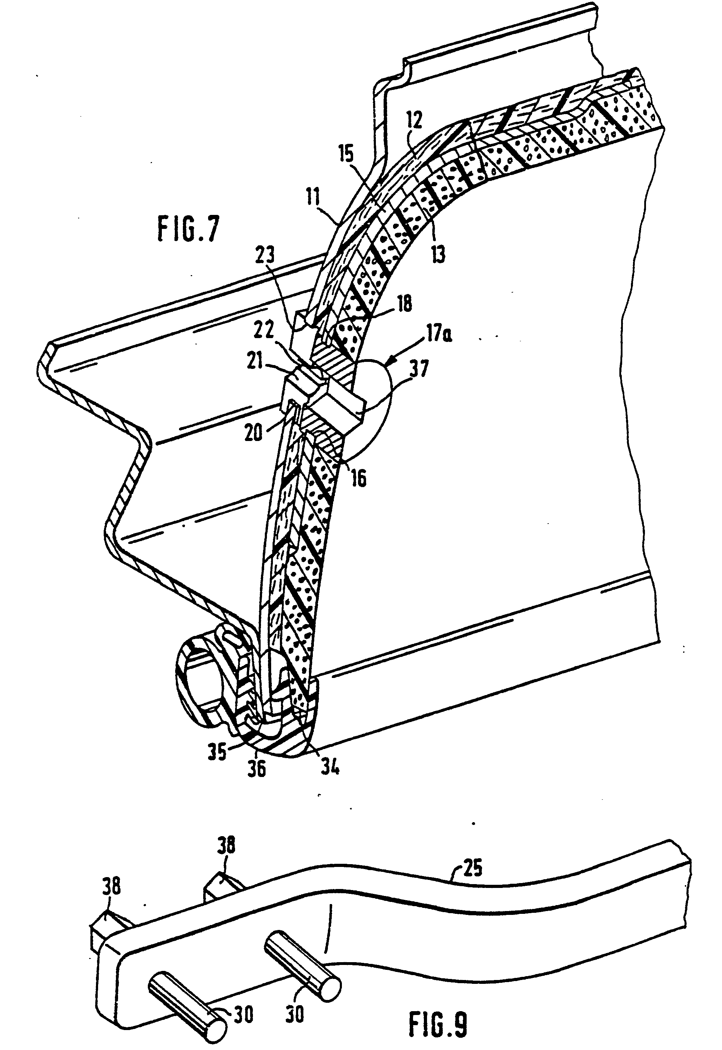

Die Ausführungsform nach Fig. 7 bis 9 entspricht im wesentlichen der Ausführungsform nach Fig. 1 bis 6, so daß zur Vereinheitlichung und zur besseren Veranschaulichung gleiche Bezugzeichen verwendet worden sind. Der Unterschied besteht im Prinzip lediglich darin, daß bei der Ausführungsform nach Fig. 7 bis 9 das nockenförmige Befestigungsteil 17a eine sechskantförmige Ausnehmung 37 für der Eingriff des Betätigungsmittels (Haltegriff 25) aufweist. Entsprechend besitzt auch das an dén Betätigungsgriff 25 angeformte Betätigungselement 38 Sechskantform. Die Fixierung des als Spreizdübel ausgebildeten Befestigungsteils 17a in seiner verdrehten bzw. verspannten Endstellung erfolgt wiederum durch Einschlagen von Bolzen 30 in die ebenfalls als Spreizdübel ausgebildeten Endteile des Betätigungselements 38.

Abweichend von den in der Zeichnung gezeigten Ausführungsbeispielen ist es auch denkbar, die Betätigungsmittel zum Verdrehen bzw. Verspannen der nockenförmigen Befestigungsteile 17 bzw. 17a auch an einem beliebigen anderen, am Fahrzeugdach von innen anbringbaren Teil, z. B. einem Kleiderhaken od. dgl., anzuformen. Darüber hinaus ist es natürlich auch möglich, die Betätigungsmittel für die nockenförmigen Befestigungsteile 17 bzw. 17a als gesonderte Bauteile auszubilden. Selbstverständlich können, je nach Anzahl der in die Innenverkleidung 10 eingebetteten Blechstreifen 15 auch mehrere derartiger Betätigungs- bzw. Arretierungsmittel entlang dem Umfang der Innenverkleidung 10 vorgesehen und anstelle von Blechstreifen auch solche aus Kunststoff eingebettet sein.

**Patentansprüche**

1. Als vorgefertigtes selbsttragendes Bauteil ausgebildete Innenverkleidung (Himmel) von Fahrzeugdächern, die aus einem in einer Form warmverpreßten Grundmaterial, in das Versteifungsteile eingeformt sind, besteht und die durch Befestigungsmittel am Dachrahmen festlegbar ist, dadurch gekennzeichnet, daß die in Fahrzeugquerrichtung gerichteten Versteifungsteile als sich über die gesamte oder im wesentlichen gesamte Breite der Innenverkleidung (10) erstreckende Blech- oder Kunststoffstreifen (15) ausgebildet sind und an ihren Enden durch das Grundmaterial (12, 13, 14) der Innenverkleidung (10) hindurch zugängliche Befestigungslöcher (16) aufweisen, und daß in den Befestigungslöchern (16) nockenförmige Befestigungsteile (17, 17a) drehbar angeordnet sind, die jeweils mit einer exzentrischen Ringnut (20) in korrespondierende Löcher (23) des Dachrahmens (11) einklipsbar und bei Drehung kraftschlüssig verriegelbar sind.

2. Innenverkleidung nach Anspruch 1, welche aus in einem Arbeitsgang verprägten, kaschierten und gestanzten Fiberglasmatten besteht, dadurch gekennzeichnet, daß die Blech- oder Kunststoffstreifen (15) zwischen zwei Fiberglasmatten (12) oder zwischen einer Fiberglasmatte (12) und der Kaschierung (13, 14) angeordnet sind.

3. Innenverkleidung nach Anspruch 1 oder 2, dadurch gekennzeichnet, daß die nockenförmigen Befestigungsteile (17, 17a) mittels einer zweiten, am Umfang angeordneten konzentrischen Ringnut (18) in die jeweils zugeordneten Befestigungslöcher (16) der Streifen (15) eingeknöpft sind.

4. Innenverkleidung nach Anspruch 1, 2 oder 3, dadurch gekennzeichnet, daß beim Einklipsen das Blechmaterial des Dachrahmens (11) in die exzentrisch ausgebildete Ringnut (20) eingreift, derart, daß durch Drehen des nockenförmigen Befestigungsteils (17, 17a) eine Verspannung der Innenverkleidung (10) gegenüber dem Dachrahmen (11) erfolgt.

5. Innenverkleidung nach einem oder mehreren der vorstehenden Ansprüche, dadurch gekennzeichnet, daß der an seinem Umfang die exzentrische Ringnut (20) aufweisende Teil des nockenförmigen Befestigungsteils (17, 17a) nach Art eines Spreizdübels ausgebildet ist, wobei er mehrere radiale Einschnitte (22) besitzt, deren Schnittflächen axial gerichtet sind.

6. Innenverkleidung nach einem oder mehreren der vorstehenden Ansprüche, dadurch gekennzeichnet, daß die nockenförmigen Befestigungsteile (17, 17a) an ihrer dem Fahrgastraum zugewandten Stirnseite jeweils eine Ausnehmung (24, 37) für der Eingriff eines Betätigungsmittels (26, 27 ; 38) aufweisen.

7. Innenverkleidung nach Anspruch 6, dadurch gekennzeichnet, daß die Ausnehmung für den Eingriff des Betätigungsmittels (38) als Innensechskant (37) ausgebildet ist (Fig. 7 bis 9).

8. Innenverkleidung nach Anspruch 6, dadurch gekennzeichnet, daß die Ausnehmung für den Eingriff des Betätigungsmittels (26, 27) eine Innenverzahnung (24) aufweist (Fig. 2 und 4 bis 6).

9. Innenverkleidung nach Anspruch 6, 7 oder 8, dadurch gekennzeichnet, daß das Betätigungsmittel (26, 27 ; 38) als Arretierungsdübel ausgebildet ist, derart, daß es zusammen mit dem nockenförmigen Befestigungsteil (17, 17a) nach Beendigung des Verdrehvorgangs (verbunden mit einer entsprechenden Verspannung der Innenverkleidung (10) gegenüber dem Dachrahmen (11)) in seiner Endstellung fixierbar ist.

10. Innenverkleidung nach Anspruch 9, dadurch gekennzeichnet, daß das Betätigungsmittel (26, 27 ; 38) durch Einschlagen eines Bolzens (30) in eine zentrische Axialbohrung (28) des Betätigungsmittels (26, 27 ; 38) in seiner Endstellung fixierbar ist.

11. Innenverkleidung nach Anspruch 9 oder 10, dadurch gekennzeichnet, daß das Betätigungsmittel (26, 27 ; 38) einstückig an ein am Fahrzeugdach von innen anbringbares Teil, vorzugsweise einen Haltegriff (25), angeformt ist.

12. Innenverkleidung nach einem oder mehreren der vorstehenden Ansprüche, dadurch gekennzeichnet, daß die Ränder (34 bzw. 35) der Innenverkleidung (10) und der zugeordneten Karosserieflansche (Dachrahmen (11)) durch einen gemeinsamen Doppelkanalkeder (36) abgedeckt sind.


**Claims**

1. Vehicle roof lining constructed as a prefabricated self-supporting component, which consists of a base material hot-pressed in a mould and having reinforcing members moulded therein, and which can be fixed to the roof frame by fastening means, characterised in that the reinforcing members, which extend in the transverse direction of the vehicle, are constructed as sheet metal or plastic strips (15) which extend across the full or essentially the full width of the lining (10) and at their ends comprise fixing holes (16) which are accessible through the base material (12, 13, 14) of the lining (10), and in the fixing holes (16) are rotatably mounted cam-like fastening members (17, 17a) which can be clipped, each by an eccentric annular groove (20), into corresponding holes (23) in the roof frame (11) and locked in force-locking relationship when rotated.

2. Lining according to claim 1, which consists of glass fibre mats embossed, backed and stamped in a single operation, characterised in that the sheet metal or plastic strips (15) are disposed between two glass fibre mats (12) or between one glass fibre mat (12) and the backing (13, 14).

3. Lining according to claim 1 or 2, characterised in that the cam-like fastening members (17, 17a) are inserted in the respectively associated fixing holes (16) in the strips (15) by means of a second concentric annular groove (18) disposed at the periphery.

4. Lining according to claim 1, 2 or 3, characterised in that the sheet metal of the roof frame (11) engages in the eccentrically constructed annular groove (20) when the fastening member (17, 17a) is clipped in, in such a way that the lining (10) is braced relative to the roof frame (11) by rotation of the cam-like fastening member (17, 17a).

5. Lining according to one or more of the preceding claims, characterised in that the portion of the cam-like fastening member (17, 17a) comprising the eccentric annular groove (20) at its periphery is constructed after the fashion of an expanding dowel, having several radial notches (22) whose cut faces extend axially.

6. Lining according to one or more of the preceding claims, characterised in that the cam-like fastening members (17, 17a) in each case comprise, in their face facing towards the passenger compartment, a recess (24, 37) for engagement by an operating means (26, 27 ; 38).

7. Lining according to claim 6, characterised in that the recess for engagement by the operating means (38) is constructed as a hexagonal recess (37) (Figs. 7 to 9).

8. Lining according to claim 6, characterised in that the recess for engagement by the operating means (26, 27) comprises internal teeth (24) (Figs. 2 and 4 to 6).

9. Lining according to claim 6, 7 or 8, characterised in that the operating means (26, 27 ; 38) is constructed as a locking dowel, in such a way that it can be fixed in its final position together with the cam-like fastening member (17, 17a) after completion of the rotation process (combined with corresponding bracing of the lining (10) relative to the roof frame (11)).

10. Lining according to claim 9, characterised in that the operating means (26, 27 ; 38) can be fixed in its final position by driving a bolt (30) into a central axial bore (28) in the operating means (26, 27 ; 38).

11. Lining according to claim 9 or 10, characterised in that the operating means (26, 27 ; 38) is formed integrally on a component which can be attached to the vehicle roof from the inside, preferably a grab handle (25).

12. Lining according to one or more of the preceding claims, characterised in that the edges (34 and 35) of the lining (10) and of the associated body flanges (roof frame (11)) are covered by a common double-channel sealing strip (36).


**Revendications**

1. Revêtement intérieur (plafond) de toits de véhicules qui, se présentant sous la forme d'un élément de construction préfabriqué autoportant, et réalisé en un matériau de base pressé à chaud dans un moule et renfermant des éléments de raidissement moulés dans la masse, peut être assujetti sur le cadre du toit par des moyens de fixation, caractérisé par le fait que les éléments de raidissement, de préférence disposés dans le sens transversal du véhicule, sont réalisés en forme de bandes de tôle ou de matière plastique (15) s'étendant sur toute ou sensiblement sur toute la largeur du revêtement intérieur (10) et comportent, à leurs extrémités, des trous de fixation (16) accessibles à travers le matériau de base (12, 13, 14) du revêtement intérieur (10), et que, dans les trous de fixation (16), sont placés des éléments de fixation en forme d'ergots (17, 17a) mobiles en rotation qui peuvent respectivement s'encliqueter par une rainure annulaire excentrique (20) dans des trous correspondants (23) du cadre (11) du toit et être verrouillés par une liaison par friction après rotation.

2. Revêtement intérieur selon la revendication 1, constitué de mâts en stratifiés à fibres de verre, gaufrés, doublés et découpés en une seule opération, caractérisé par le fait que les bandes de tôle ou de matière plastique (15) sont disposées entre deux mâts (12) de stratifiés à fibres de verre ou entre un mât (12) de stratifiés de fibres de verre et de la doublure (13, 14).

3. Revêtement intérieur selon la revendication 1 ou 2, caractérisé par le fait que les éléments de fixation (17, 17a) en forme d'ergots sont boutonnés dans les trous (16), respectivement y associés, de bandes (15), au moyen d'une seconde rainure annulaire concentrique (18) pratiquée sur la périphérie.

4. Revêtement intérieur selon la revendication 1, 2 ou 3, caractérisé par le fait que, lors de l'encliquetage, le matériau en tôle du cadre (11), du toit s'encastre dans la rainure annulaire (20) réalisée excentrique de manière que, par rotation de l'élément de fixation (17, 17a) en forme d'ergot, il se produise un serrage du revêtement intérieur (10) vis-à-vis du cadre (11) du toit.

5. Revêtement intérieur selon l'une ou plusieurs des revendications précédentes, caractérisé par le fait que la partie de l'élément de fixation (17, 17a) en forme d'ergot, comportant la rainure annulaire excentrique (20) sur sa périphérie, est réalisée à la manière d'un goujon à expansion et présente, à cet effet, plusieurs entailles radiales (22) dont les surfaces de coupe sont dirigées axialement.

6. Revêtement intérieur selon l'une ou plusieurs des revendications précédentes, caractérisé par le fait que les éléments de fixation (17, 17a) en forme d'ergots comportent respectivement, sur leur face frontale tournée vers l'habitacle, un évidement (21, 37) pour l'engagement d'un organe de manœuvre (26, 27 ; 38).

7. Revêtement intérieur selon la revendication 6, caractérisé par le fait que l'évidement pour l'engagement de l'organe de manœuvre (38) est réalisé sous la forme d'un six pans creux (37) (figures 7 à 9).

8. Revêtement intérieur selon la revendication 6, caractérisé par le fait que l'évidement pour l'engagement de l'organe de manœuvre (26, 27) comporte une denture intérieure (24) (figures 2 et 4 à 6).

9. Revêtement intérieur selon la revendication 6, 7 ou 8, caractérisé par le fait que l'organe de manœuvre (26, 27 ; 38) est réalisé sous la forme d'un goujon d'arrêt de telle sorte qu'après l'achèvement du processus de rotation (lié à un serrage correspondant du revêtement intérieur (10) vis-à-vis du cadre (11) du toit), il soit fixé à sa position finale en même temps que l'élément de fixation (17, 17a) en forme d'ergot.

10. Revêtement intérieur selon la revendication 9, caractérisé par le fait que l'organe de manœuvre (26, 27 ; 38) est fixé à sa position finale par enfoncement d'une cheville (30) dans un perçage axial central (28) de l'organe de manœuvre (26, 27 ; 38).

11. Revêtement intérieur selon la revendication 9 ou 10, caractérisé par le fait que l'organe de manœuvre (26, 27 ; 38) est façonné d'une seule pièce sur un élément, de préférence une poignée-barre (25), pouvant être fixé de l'intérieur sur le toit du véhicule.

12. Revêtement intérieur selon l'une ou plusieurs des revendications précédentes, caractérisé par le fait que les bords (34, 35) du revêtement intérieur (10) et des brides y associées de la carrosserie (cadre (11) du toit) sont recouverts d'un bourrelet à double canal (36).

0 088 931

FIG.1

FIG.2

FIG.3

FIG.4

FIG.5

FIG.6

FIG.8

FIG.7

FIG.9